# EUROPÄISCHE PATENTSCHRIFT

(11) **EP 2 469 123 B1**
(45) Veröffentlichungstag und Bekanntmachung des Hinweises auf die Patenterteilung: **26.02.2014**
(21) Anmeldenummer: 11010106.0
(22) Anmeldetag: 22.12.2011
(51) Int. Cl.: F16G 5/08, F16G 5/20

(54) **Riemen mit hoher dynamischer Belastbarkeit**
Belt with high dynamic load resistance
Courroie ayant une charge admissible dynamique supérieure

(30) Priorität: 23.12.2010 DE 102010055793
(43) Veröffentlichungstag der Anmeldung: 27.06.2012
(73) Patentinhaber: Arntz Beteiligungs GmbH & Co. KG, 37671 Höxter (DE)
(72) Erfinder: Lotz, Florian, Dr, DE-37647 Brevörde (DE); Kopmann, Dennis, DE-30827 Garbsen (DE)
(74) Vertreter: Lins, Martina

(56) Entgegenhaltungen:
- EP-A1- 1 148 092
- EP-A1- 1 241 379
- DE-A1-102008 025 030
- H S Katz,J V Milevski: "Handbook of Fillers for Plastics", 30. November 1987 (1987-11-30), Springer, The U.S., XP002687868, ISBN: 0-442-26024-5 Bd. 1, Seiten 167-170, 173-174, * Seite 167 - Seite 170 * * Seite 173 - Seite 174 *

## Beschreibung

Die Erfindung betrifft einen Riemen, insbesondere einen Antriebsriemen mit einem Elastomer-Grundkörper und wenigstens einer Zugschicht mit Zugträgern sowie ein Verfahren zu dessen Herstellung.

Die Erfindung bezieht sich auf das Gebiet der Förderriemen und der Kraftübertragungsriemen für Zugmittelgetriebe. Dabei kann es sich sowohl um Flachriemen als auch um Keilriemen handeln. Solche Riemen haben generell besonderen dynamsich-mechanischen Anforderungen standzuhalten. Diese Belastung erfolgt nicht lediglich in einer Zugrichtung. Gerade bei Keilriemen geschieht die Kraftüberleitung in der Kraftübertragungszone des Riemens quer zur Laufrichtung, wodurch das Riemenmaterial hohen inneren Scherkräften ausgesetzt wird. Die Lebensdauer eines solchen Riemens hängt unter anderem von der Zugkraft, d.h. den vom Anwendungsbereich abhängigen Wellenspann- und Trumkräften, der Anzahl der Biegewechsel, dem Spannungswechsel bei Anlauf- und Bremsvorgängen und der Schalthäufigkeit ab. Gleichzeitig sollen diese Riemen, die ein Verbrauchsmaterial darstellen, kostengünstig herzustellen sein.

Aus der DE 695 26 845 T3 ist bereits ein Riemen für dynamische Belastungsanwendungen bekannt, der einen Hauptriemenkörperteil mit einer Kraftübertragungszone aus einer elastomeren EPM-Zusammensetzung besitzt. Die elastomere Zusammensetzung ist ein Reaktionsprodukt, das durch radikalisches Aushärten eines Gemisches mit einem Ethylen-alpha-Olefin, einem verstärkenden Füllstoff und einem Metallsalz-Coaktivator entsteht, wobei das Ethylen-alpha-Olefin-Elastomer durch einen spezifischen Gehalt an Ethyleneinheiten gekennzeichnet ist, der 55 bis 78 Gew.-% des Elastomergewichts beträgt. Derartige Riemen zeichnen sich durch eine gute Wärmestabilität und eine gute Beständigkeit gegenüber Sauerstoff und Ozon aus.

Des Weiteren offenbart das Dokument DE 102008025030 A1 einen anderen aus dem Stand der Technik bekannten Antriebsriemen.

Die dynamisch-mechanischen Eigenschaften solcher EPM-Riemen sind bislang nur bei Verwendung des Füllstoffs Ruß ausreichend. Erwünscht wäre jedoch die Verwendung eines sogenannten "weißen Füllstoffs", da Ruße flüchtige organische Bestandteile, einschließlich von Aromaten und PAKs enthalten können, die unter ökologischen Gesichtspunkten zu vermeiden sind. Auch ist der schwarze Abrieb bei manchen Anwendungen unerwünscht. Die Einbindung von Silica war wegen der schlechten Anbindung zu EPM-Elastomeren nicht erfolgreich und führte bislang zu einem zu schnellen inneren Bruch des Riemens bei Belastung.

Die Aufgabe der Erfindung bestand also darin, einen Riemen mit Elastomeren der M-Gruppe für Anwendungen unter hohen dynamischen Belastungen so weiterzubilden, dass mit einem weißen Füllstoff eine zufriedenstellende Lebensdauer unter Last erreicht werden kann. Der Riemen sollte weiterhin alterungsbeständig sein, geringen Verschleiß und gute Laufeigenschaften besitzen.

Diese Aufgabe wird durch einen Riemen gemäß Anspruch 1 gelöst, der durch ein Verfahren gemäß Anspruch 15 hergestellt werden kann. Vorteilhafte Ausgestaltungen der Erfindung sind in den Unteransprüchen gekennzeichnet.

Gattungsgemäße Riemen sind solche mit einem Elastomer-Grundkörper und wenigstens einer Zugschicht mit Zugträgern. Die Zugträger können aus jedem dem Fachmann auf diesem Gebiet bekannten Material bestehen, beispielsweise aus Metall oder aus Kunststofffasern, wie Polyamid, Aramid, Polyester und dergleichen, wobei die Zugträger wie üblich längs des Riemens, in Längs- und Querschichten oder verschränkt angeordnet sein können. Außerdem können die Zugträger mit oder ohne Haftvermittler oder haftvermittelnden Schichten oder Folien in den Riemen eingebunden sein.

Die Riemen sind bevorzugt als Endlosriemen ausgebildet.

Der Riemen weist weiterhin im Allgemeinen einen die Zugträger abdeckenden Riemenrücken auf, der aus einem anderen als dem erfindungsgemäßen Elastomer bestehen kann. Der Riemenrücken wird zuweilen auch als Deckschicht bezeichnet. Wichtig für die Erfindung ist es, dass ein Teil des Riemens, beispielsweise die Kraftübertragungszone des Riemens, der gesamte Kern (auch als Unterbau bezeichnet), eine äußere Deckschicht, der Riemenrücken oder die Zuglagen-Einbettung aus dem besonderen Elastomer nach der Erfindung besteht. Erfindungsgemäß ist daher entweder der Grundkörper des Riemens insgesamt oder wenigstens ein Teil des Riemens, beispielsweise eine Riemenschicht, der Kern oder ein Teil des Kerns, aus diesem besonderen, erfindungsgemäßen Elastomer gebildet. Es können verschiedene Elastomere nach der Erfindung bei einem Riemen eingesetzt werden, beispielsweise verschieden eingefärbte Elastomere, und das erfindungsgemäße Elastomer kann demnach mit anderen, beispielsweise üblichen rußgefüllten Elastomeren in einem Riemen kombiniert werden.

Das besondere Elastomer des Riemengrundkörpers ist in einer bevorzugten Ausführungsform zu wenigstens 50 Gew.-% ein Elastomer der M-Gruppe und enthält keinen Naturkautschuk. Andere Synthesekautschuke oder eingemischte Thermoplaste können in untergeordneter Menge im Elastomeranteil (ad 100 phr) vorhanden sein.

Das neue erfindungsgemäße Elastomer ist u.a. erhältlich durch radikalische Vernetzung, ausgenommen durch Schwefelvulkanisation, eines Gemisches, enthaltend:
(a) 51 bis 99 phr eines ersten Ethylen-alpha-Olefins mit einem Gehalt an Ethyleneinheiten von 40 bis 55 Gew.-% bezogen auf den Anteil des ersten alpha-Olefins,
(b) 1 bis 49 phr eines zweiten Ethylen-alpha-Olefins mit einem Gehalt an Ethyleneinheiten von 55 bis 78 Gew.-% bezogen auf den Anteil des zweiten alpha-Olefins,
   wobei die Summe der Komponenten (a) und (b) wenigstens 50 Gew.-% am Gewichtsanteil des in dem Grundkörper enthaltenen Elastomers ausmacht;
(c) 10 bis 90 phr eines Füllstoffs, der zu wenigstens 80 Gew.-% aus einem Kieselsäurematerial mit einer spezifischen Oberfläche nach BET größergleich 50 m²/g besteht, welches mit funktionellen Gruppen oberflächenfunktionalisiert ist oder im Gemisch mit einem Funktionalisierungsreagens für die Einführung funktioneller Gruppen an dem Kieselsäurematerial eingemischt wird,
wobei die funktionellen Gruppen aus dem Kieselsäurematerial befähigt sind, bei radikalischer Vernetzung in die Vernetzung der Alpha-Olefine mit eingebunden zu werden.

Die Mengenangabe phr (parts per hundred parts of rubber by weight) gibt die Gewichtsanteile der Rezeptur bezogen auf 100 Gewichtsteile der Elastomer- bzw. Synthesekautschuk-Gesamtmenge an, wobei die Ausgangsstoffe für das Elastomer (der Kautschuk) in untergeordneter Menge eingemischte sonstige Polymere, z.B. Thermoplaste wie UHMW-PE enthalten kann (UHMW-PE = ultra high molecular weight Polyethylen, mit einer Molmasse, die sich typischerweise zwischen 1 bis 10 Mio g/mol bewegt, und einer Dichte im Bereich 0,93 - 0,94).

Die radikalische Vernetzung kann auf unterschiedliche Weise bewirkt werden. Bevorzugt ist die Verwendung eines Radikalbildners und insbesondere eines Peroxids. Alternativ kann die Vernetzung bzw. die diese auslösende Radikalbildung durch Bestrahlung, insbesondere ionisierende Strahlung wie zum Beispiel γ-Strahlung, aber auch bereits durch UV-Strahlung, bewirkt werden. Dem Fachmann sind geeignete Techniken bekannt, die allerdings vorzugsweise nur für die Vernetzung dünner Schichten eingesetzt werden, also hier in erster Linie bei Flachriemen.

Dadurch, dass in dem zum Elastomer zu vernetzenden Grundgemisch (Kautschukgemisch) eine Ethylen-alpha-Olefin-Mischung aus den Komponenten (a) und (b) mit unterschiedlichem Ethylenanteil verwendet wird, kann der kristalline bzw. amorphe Charakter des erhaltenen Elastomers gezielt beeinflusst werden. Überraschenderweise wurde gefunden, dass eine solche Alpha-Olefin-Mischung sich ausgezeichnet mit einem funktionalisierten Silica-Füllstoff verbinden lässt und dass das erhaltene Elastomer gerade solche dynamisch-mechanischen Eigenschaften zeigt, wie sie für einen Riemen der eingangs genannten Art wünschenswert sind.

Die Summe der Komponenten (a) und (b) soll wenigstens 50 Gew.-% am Gewichtsanteil des in dem Grundkörper enthaltenen Elastomers, wie oben definiert, ausmachen, vorzugsweise wenigstens 70 Gew.-%, weiter vorzugsweise wenigstens 80 Gew.-%. Zusätzlich können Comonomere oder Copolymere, wie zum Beispiel Diene vorhanden sein. Letztere ergeben anstelle eines EPM-Elastomers ein EPDM-Elastomer, welches ebenfalls einen erfindungsgemäßen Riemen mit sehr vorteilhaften dynamischen Eigenschaften ergibt. Als Diene sind alle üblicherweise für EPDM-Elastomere verwendeten Diene geeignet, speziell sämtliche nicht-konjugierten Diene, einschließlich von 1,4-Hexadien, 1,6-Octadien, Dicyclopentadien, Ethylidennorbornen (ENB), und anderen mehr. Der Diengehalt kann vorteilhafterweise 0 bis 20 phr betragen, weiter vorzugsweise 0 bis 12 phr, besonders bevorzugt sind Diengehalte zwischen 0 und 6 phr, sofern mit EPDM gearbeitet wird, beträgt die Untergrenze des Diengehaltes vorzugsweise 2 phr.

Im Sinne dieser Erfindung bedeutet "Elastomer" ein zu einem dreidimensionalen Netzwerk vernetztes Polymer, das keine rein thermoplastischen Eigenschaften, wie Schmelzbarkeit besitzt. Gewisse Anteile an Thermoplasten können jedoch mit eingemischt sein, ohne dass das Elastomer insgesamt seine charakteristischen E-lastomereigenschaften verliert. Der Thermoplastanteil im Elastomer sollte deshalb 30 Gew.-% und vorzugsweise 20 Gew.-% nicht überschreiten. Das besondere Elatomer des Riemengrundkörpers, d.h. das Elastomer nach dieser Erfindung, ist vorzugsweise zu wenigstens 50 Gew-.% ein Elastomer der M-Gruppe und enthält vorzugsweise keinen Naturkautschuk.

Zusätzlich zu den in den unten aufgeführten Tests beschriebenen guten dynamischen Kennwerten und der geringen Eigenerwärmung bei Betrieb besitzt der erfindungsgemäße Riemen weitere Vorteile. So wurde erstaunlicherweise festgestellt, dass die Riemenkautschukmischung vor dem Vulkanisieren bzw. Vernetzen eine sehr gute Lagerbeständigkeit besitzt. Herkömmliche Riemenmischungen altern im unvulkanisierten Zustand leicht. Bei Fertigung auf Abruf kann es ein wesentlicher Vorteil sein, wenn Platten/Folien aus der unvulkanisierten Riemenkautschukmischung vorgehalten werden können, ohne dass die Qualität des Endprodukts leidet. Die erfindungsgemäße Riemenkautschukmischung ist vor der Vulkanisation wenigstens 2- bis 5mal länger haltbar als herkömmliche (in Platten gewalzte) Mischungen.

Ein weiterer Zusatznutzen besteht darin, dass das Riemenmaterial nach der Erfindung deutlich geringere Ausdünstungen freisetzt, und zwar sowohl während des Betriebs als auch während der Fertigung. Die Riemen nach der Erfindung haben außerdem eine deutlich bessere Tieftemperatur-Flexibilität als herkömmliche, rußgefüllte Riemen.

Besonders bevorzugt enthält das erste Ethylen-alpha-Olefin einen Gehalt an Ethyleneinheiten von 50 bis 55 Gew.-% bezogen auf den Anteil des ersten alpha-Olefins und das zweite Ethylen-alpha-Olefin einen Gehalt an Ethyleneinheiten von 65 bis 75 Gew.-% bezogen auf den Anteil des zweiten alpha-Olefins.

Wie bereits erwähnt, enthält das radikalisch zu vernetzende Gemisch vorzugsweise einen Radikalbildner, der in den bevorzugten Ausführungsformen in einer Menge von 2 bis 12 phr, vorzugsweise 3 bis 7 phr, in der Mischung für das erfindungsgemäße Elastomer enthalten sein kann. Als Radikalbildner können alle in der Kautschukindustrie für diesen Zweck bekannten Stoffe verwendet werden, u. a. Azo-bis-(isobutyronitril) und ganz besonders bevorzugt Peroxide, insbesondere organische Peroxide, wie zum Beispiel Dicumylperoxid, Di-t-butyl-Peroxid, Diisopropylbenzol, t-Butylperbenzoat oder alpha-alpha-bis(t-butylperoxy)diisopropylbenzol. Andere Peroxidstarter sind dem Fachmann bekannt und können ebenfalls hier eingesetzt werden.

Das erfindungsgemäße radikalisch zu vernetzende Gemisch kann weiterhin bei der Kautschukherstellung übliche Zusatz- und Hilfsstoffe in dafür üblichen Gewichtsanteilen enthalten, insbesondere ausgewählt aus der Gruppe: Weichmacher, Dispergiermittel, Mastiziermittel, Haftvermittler, Alterungsschutzmittel, Trennmittel, Gleitmittel, Stabilisatoren, Vernetzungsbeschleuniger, Vernetzungsverzögerer, Farbstoffe, Verstärkungsfasern. Einen Überblick zu den verschiedenen Hilfsstoffgruppen gibt beispielsweise: Jochen Schnetger, "Lexikon der Kautschuktechnik", 3. Auflage 2004.

Weiterführende Angaben zu Vernetzern (insbesondere Peroxiden), Hilfsstoffen, Verarbeitungsverfahren und Tests kann der Fachmann beispielsweise "Ullmann's Encyclopedia of Industrial Chemistry", VCH, Weinheim 1993, Vol. A23, Seiten 221 - 472 unter "Rubber..." entnehmen, insbesondere dort bei Kapiteln 4.1.3., 4.1.5.1., 4.1.6., 4.2., 4.3.4., 4.4., 4.5. und 4.6...

Die erfindungsgemäße Mischung enthält weiterhin vorzugsweise 1 bis 30 phr , vorzugsweise 5 bis 20 phr, eines ionischen Aktivators. Dieser Aktivator ist von besonderer Bedeutung und ermöglicht eine Vergleichmäßigung der Vernetzung mittels ionischer Mechanismen. In besonderer Weise geeignet sind hierfür die Metallsalze wenigstens zweifach ungesättigter organischer Säuren und insbesondere von α ,β-ungesättigten organischen Säuren. Geeignet im Sinne der Erfindung sind unter anderem die Salze der Acrylsäure und Acrylsäure-Derivate der allgemeinen Form:

(R-C(R")=C(R')-COO⁻)ₙ Mⁿ⁺,

mit R = H, COOH, Vinyl, CH₂COOH, Methyl oder Aryl;
R'= H, Methyl, Ethyl, COOH;
R"= H, COOH; und M = Metall, insbesondere Zn⁺⁺

Das Metall (M) kann auch gewählt werden aus der Gruppe Cd, Ca, Mg, Na, Al. Besonders bevorzugt sind die Aktivatoren Zinkdiacrylat und Zinkdimethacrylat.

Weitere Chelatbildner kommen als Bestandteil des ionischen Aktivators in Betracht, z.B. Oxim, Guanidin oder Cyanurat, jeweils in Kombination mit einem Metallion, wie oben genannt.

Ein wesentlicher Aspekt der Erfindung ist die Einbindung eines weißen Füllstoffs, nämlich insbesondere eines Kieselsäurematerials bzw. von dispersem Siliziumdioxid. Diese Art von Füllstoffen ist in "Ullmann's ...", a.a.O., S. 395 unter dem Thema "aktive weiße Füllstoffe" beschrieben (Kapitel "Rubber, 4.3.3.1.").

Erfindungsgemäß werden für das besondere, radikalisch zu vernetzende Elastomer nach der Erfindung 10 bis 90 phr eines Füllstoffs verwendet, der zu wenigstens 80 Gew.-% aus einem Kieselsäurematerial mit einer spezifischen Oberfläche nach BET gemessen von größer oder gleich 50 m²/g besteht, welches mit funktionellen Gruppen oberflächenfunktionalisiert ist oder im Gemisch mit einem Funktionalisierungsreagens für die Einführung funktioneller Gruppen an dem Kieselsäurematerial eingemischt wird, wobei die funktionellen Gruppen zur radikalischen Vernetzung innerhalb des Kautschuksystems und insbesondere mit Doppelbindungssystemen befähigt sind.

Die bei der Vernetzung einzubindende Gruppe ist wenigsten eine Gruppe des Typs Vinyl, Allyl, Amino, Carboxyl oder Hydroxyl. Besonders bevorzugt sind die Gruppen des Typs Vinyl oder Allyl.

Das Kieselsäurematerial ist vorzugsweise eine gefällte Kieselsäure oder ein pyrogenes Siliziumdioxid mit der oben genannten spezifischen Oberfläche, vorzugsweise mit einer Oberfläche größer oder gleich 100 m²/g und einem spezifischen Gewicht unter 200 g/l. Die Teilchengröße des hochdispersen Füllstoffs ist in der Regel kleiner oder gleich 150 nm mittlerer Teilchendurchmesser, vorzugsweise kleiner oder gleich 100 nm oder sogar 80 nm mittlerer Teilchendurchmesser..

Das Funktionalisierungsreagenz ist allgemein ein bifunktionelles Reagens, dessen eines Molekülende befähigt ist, mit dem Kieselsäurematerial kovalente Bindungen oder Wasserstoffbrückenbindungen einzugehen und dessen anderes Molekülende befähigt ist, mit den Olefinen gemeinsam radikalisch vernetzt zu werden. Derartige Funktionalisierungsreagenzien sind bekannt und kommerziell erhältlich. Auch mit derartigen Reagenzien bereits behandelte und auf diese Weise funktionalisierte Kieselsäure-Qualitäten sind bekannt und im Handel erhältlich.

Bei den Funktionalisierungsreagenzien handelt es sich in der Regel um bifunktionelle Organosilane, die am Siliziumatom mindestens eine Alkoxy-, Cycloalkoxy- oder Phenoxygruppe für die Anbindung an den Silica-Füllstoff besitzen und die als bei der Vernetzung einzubindende Gruppe wenigstens eine Gruppe des Typs Vinyl, Allyl, Amino, Carboxyl, Hydroxyl oder weiterer vernetzungsgeeigneter Typen besitzen. Wird das Funktionalisierungsmittel gesondert eingesetzt, z.B. im Prämix mit dem Füllstoff, geschieht dies vorzugsweise in einer Menge von ca. 2 bis 20 Gew.-% an Reagenz bezogen auf das Füllstoffgewicht.

Der erfindungsgemäße Riemen ist bevorzugt so aufgebaut, dass das radikalisch vernetzte Elastomer wenigstens eine im Kontakt mit Kraftüberträgern oder Führungselementen (Scheiben, Rollen) stehende Riemenschicht bildet.

Gemäß einer anderen bevorzugten Ausführungsform ist der Riemen so aufgebaut, dass das radikalisch vernetzte Elastomer wenigstens eine im Inneren des Riemens liegende Riemenschicht oder einen innen liegenden Riemenbereich, z. B. einen Teil des Kerns bildet. Nach einer weiteren bevorzugten Ausführungsform wird die Zugträger-Einbettungsschicht aus dem besonderen Elastomer nach der Erfindung gebildet. Auch kann die gesamte Kraftübertragungszone des Riemens, der gesamte Kern mit oder ohne Riemenrücken oder der gesamte Elastomergrundkörper aus dem Elastomer nach dieser Erfindung bestehen. Insbesondere ist vorgesehen, dass der Riemen - wenigstens riemenseitig, also auf seinem Unterbau - keine zusätzliche Abdeckung oder Beflockung, insbesondere keine textile Abdeckung besitzt. Gemäß einem weiteren Aspekt der Erfindung ist das Elastomer eingefärbt, insbesondere pigmentiert. Der weiße Füllstoff erlaubt im Gegensatz zu Ruß praktisch jede Farbgebung. Auch kann der Riemen mehrfarbig gestaltet sein.

In einer weiteren bevorzugten Ausführungsform sind wenigstens zwei Elastomerschichten oder Lagen oder Grundkörperbereiche des Riemens unterschiedlich eingefärbt. Dabei kann eine Deckschicht an der Kraftübertragungszone farblich anders als das darunter liegende Elastomer eingefärbt sein, so dass ein bestimmter Verschleißzustand, bei dem die andersfarbige Deckschicht durch Abrieb abgetragen wurde, sofort optisch erkennbar ist. Durch die Erfindung entfällt auch der bei rußgefüllten Riemen unvermeidlich schwarze, häufig schmutzig wirkende Abrieb.

Zur Erhöhung der Querstabilität können beispielsweise Fasern aus Aramid, Polyamid, Polyester, Baumwolle, Viskose, Cellulose, Glas, Carbon und Polyacrylnitril eingesetzt werden, wobei die Faseranteile bevorzugt in Konzentrationen von 1 bis 40 phr zugegeben werden. Es ist vorteilhaft, wenn die Fasern gemeinsam mit einem Haftvermittler bzw. Adhäsionsmittel verwendet werden. Sie können der gesamten Grundmischung zugegeben werden. Die Verstärkungsfasern werden häufig für die Quersteifigkeit und die Laufruhe des Riemenrückens bzw. eine der Kraftübertragungsseite abgewandte Deckschicht verwendet.

Bei dem erfindungsgemäßen Riemen handelt es sich bevorzugt um einen Keilriemen, insbesondere einen Keilrippenriemen. Wie oben bereits beschrieben, sind andere Riemenarten dadurch nicht ausgeschlossen, einschließlich von Flachriemen und Förderriemen.

Durch das besondere erfindungsgemäße Material des Riemens ist es weiterhin möglich, ein vereinfachtes Herstellungsverfahren einzusetzen.

Üblicherweise werden die vulkanisierbaren Mischungen für Riemenelastomere im mehreren Stufen vermischt, das heißt, es werden in der Regel Vormischungen hergestellt, die dann wiederum untereinander vermischt bzw. verknetet werden müssen. Mit der Erfindung ist es nun möglich, das Vermischen des besonderen Elastomers für den Grundkörper einstufig durch Vermengen aller Bestandteile in einem Mischer durchzuführen, wobei ein gegebenenfalls zugegebener Radikalbildner zuletzt zugefügt wird. Dabei werden alle Bestandteile nacheinander oder in Form loser Vormischungen in einen Intensivmischer, beispielsweise einen Stempelkneter gegeben und dort intensiv vermengt und verknetet.

Die dadurch erhaltene vulkanisierbare, d.h. hier radikalisch vernetzbare Mischung wird wie üblich weiterverarbeitet, also in der Regel ausgewalzt, mit Zugträgerlagen und Rücken verklebt oder verpresst, geformt und in der Hitze vulkanisiert (vernetzt). Die Riemenform kann durch Heißpressen, d.h. Prägen, oder nachträgliches Schneiden oder Schleifen eines Rohkörpers erhalten werden. Derartige Verarbeitungsverfahren sind dem Fachmann als solches bekannt und brauchen hier nicht näher beschrieben zu werden.

Im Folgenden wird die Erfindung anhand von Zeichnungen, Beispielen und Leistungstests näher Beschrieben. Dies soll allein illustrativen Zwecken dienen und die Erfindung in ihrer oben beschriebenen Allgemeinheit nicht beschränken.

Die Figuren zeigen
- Fig. 1: eine Teilquerschnittsansicht eines Keilrippenriemens;
- Fig. 2: eine Teilquerschnittsansicht eines anderen Ausführungsbeispiels eines Keilrippenriemens mit zusätzlicher äußerer Deckschicht;
- Fig. 3: eine Prüfkonfiguration für dynamische Tests an Endlosriemen.

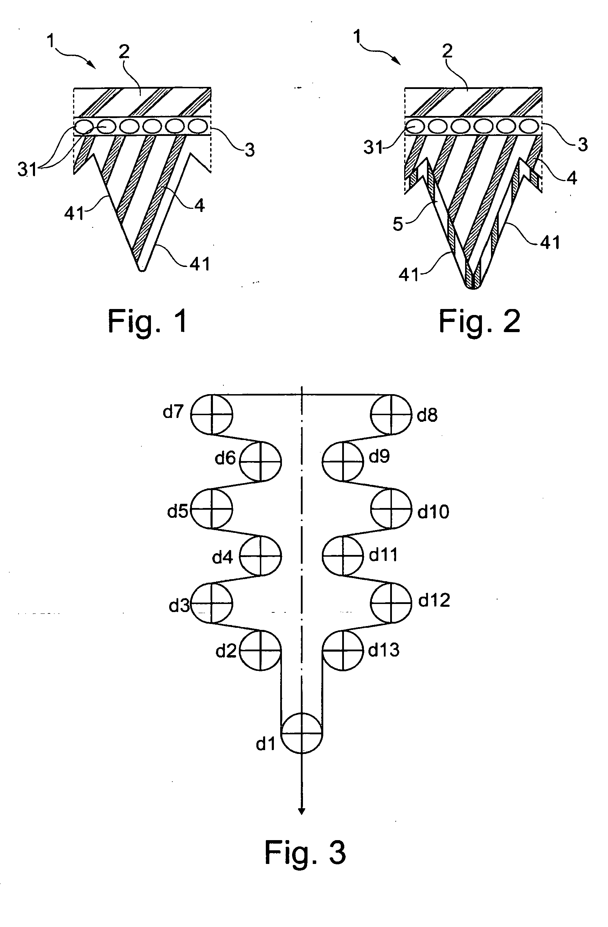

Figur 1 zeigt einen Teilbereich eines Keilrippenriemens 1 in schematischer Querschnittsansicht (Zeichnung nicht maßstabsgetreu). Der Riemen 1 setzt sich zusammen aus dem Riemenrücken 2, der Zugträgerlage 3 und dem Kern 4. Die Zugträgerlage 3 wird durch eine Reihe längs, zur Riemenrichtung verlaufender Zugträger 31 gebildet, die in eine Elastomermischung eingebettet sind. Dabei kann es sich um eine spezielle Einbettungsmischung handeln. Der Kern 4 kann heißgeformt, geprägt oder geschnitten/geschliffen sein. Bei diesem Ausführungsbeispiel ist der Unterbau 4 aus einer Kernmischung mit dem erfindungsgemäßen neuen Elastomer gebildet. Das neue Elastomer kommt gerade auch in den Kraftübertragungszonen 41 zum Einsatz und ist nicht mit einer beispielsweise textilen Abdeckung versehen.

Figur 2 zeigt ein anderes Ausführungsbeispiel eines Keilrippenriemens 1, der wiederum in einer schematischen Teilquerschnittsansicht gezeigt ist (Zeichnung nicht maßstabsgetreu). Bei diesem zweiten Ausführungsbeispiel besitzt der Kern 4 zusätzlich eine äußere Deckschicht 5. Diese ist bei dem gezeigten Beispiel ebenfalls aus dem neuen Elastomer gebildet, jedoch sind hier der Kernbereich 4 und die Deckschicht 5 unterschiedlich und deutlich voneinander abweichend pigmentiert. Bei Beschädigung oder Verschleiß des Riemens ist dies daher optisch unmittelbar zu erkennen.

### BEISPIELE

Für eine nachfolgend heiß zu vernetzende Mischung wurden beispielhaft folgende Zusammensetzungen gewählt:

### Mischung 1

| **Bestandteil** | **Gehalt (phr)** |
|---|---|
| EPDM1: Ethylen-Propylen-Dien-Terpolymer, Ethylengehalt 50 %, Diengehalt* 4,9 % | 45 |
| EPDM2: Ethylen-Propylen-Dien-Terpolymer, Ethylengehalt 70 %, Diengehalt 4,9 % | 55 |
| Silica-Silan-Zusammensetzung: VN2 + VTEo** | 50 |
| Weichmacher: Mineralöl-Weichmacher | 12 |
| TMQ Antioxidanz 2,2,4-Trimethyl-1,2-dihydrochinolin | 0,5 |
| Stearinsäure | 4 |
| ZnO | 2 |
| MgO | 4 |
| Ionischer Aktivator: Zink-Dimethacrylat | 12 |
| Peroxid- Vernetzer: Di(t-butylperoxy-isopropyl)benzol | 4 |

| | |
|---|---|
| * Dien = ENB **VN2 + VTEo = ein VN2-Silica-Füllstoff (spez. Oberfl. BET: 125 - 130 m²/g), vorreagiert bzw. vorvermischt mit 8 phf Vinyltriethoxysilan | |

### Mischung 2

| **Bestandteil** | **Gehalt (phr)** |
|---|---|
| EPM1: Ethylen-Propylen-Copolymer, Ethylengehalt 73 %, Diengehalt* 4,9 % | 45 |
| EPM2: Ethylen-Propylen-Copolymer, Ethylengehalt 45 %, Diengehalt 4,9 % | 55 |
| Silica-Silan-Zusammensetzung: VN2 + VTEo** | 55 |
| Weichmacher: Mineralöl-Weichmacher | 12 |
| TMQ Antioxidanz 2,2,4-Trimethyl-1,2-dihydrochinolin | 0,5 |
| ZnO | 5 |
| MgO | 5 |
| Ionischer Aktivator: Zink-Dimethacrylat | 12 |
| Peroxid- Vernetzer: Di(t-butylperoxy-isopropyl)benzol | 4,5 |

| | |
|---|---|
| * Dien = ENB **VN2 + VTEo = ein VN2-Silica-Füllstoff (spez. Oberfl. BET: 125 - 130 m²/g), vorreagiert bzw. vorvermischt mit 8 phf Vinyltriethoxysilan | |

Vergleichbare ähnliche Mischungen wurden ebenfalls getestet und gaben grundsätzlich vergleichbare positive Ergebnisse in den nachfolgend aufgeführten Belastungstests. Die Gehalte für die Hilfsstoffe bewegten sich dabei etwa in folgendem Rahmen:
beigemischtes Polymer (auch thermoplastisch): 0 bis 30 phr, kurze Fasern: 0 bis 40 phr (vorzugsw. 0 - 20 phr), Mineralöl-Weichmacher: 0 bis 25 phr (4 bis 25 phr),
MgO: 0 bis 8 phr (1 bis 8 phr), ZnO: 0 bis 8 phr (1 bis 8 phr), Stearinsäure: 0 bis 8 phr (1 bis 8 phr), CaCO₃: 0 bis 20 phr, Antioxidanz: 0 bis 2 phr (0,5 bis 2 phr), Radikalbildner (Peroxid) 2 bis 10 phr.

Ein Diengehalt zwischen 2 und 12 Gewichtsprozent bezogen auf das Terpolymer entspricht einem Doppelbindungsanteil von ca. 3 bis 16 Doppelbindungen pro 1000 C-Atome. Der hier gewählte Bereich für die Beispiele zwischen 4 und 5 % verbindet bei der erfindungsgemäßen Mischung die Vorteile hoher Vernetzungsgeschwindigkeiten und Festigkeiten mit dennoch guter Alterungsbeständigkeit (des Vulkanisats, sowie im unvulkanisierten Zustand sogar erhöhte Alterungsbeständigkeit, s.v.), einschließlich guter Witterungs- und Ozonbeständigkeit..

Als Referenzmischung wurde die identische Rezeptur verwendet, bei der lediglich der Füllstoff Silica-Silan durch Ruß ersetzt wurde (Ruß N330).

Aus den beiden Mischungen, Referenz' und Mischung 1', wurden Elastomere hergestellt, und zwar 1.) Testprüfkörper und 2.) Testriemen.

### Tests an Testprüfkörpern

Als Testprüfkörper wurden S1- und S2-Stäbe hergestellt.
Bei Prüfkörpern, die mit reinem, nicht funktionalisiertem Silica hergestellt wurden, sanken die Bruchkraft und das 10%-Modul, und es erhöhte sich der Payne-Effekt um ca. 30 bis 40 %. im Vergleich zu Mischung 1.

Die positiven Eigenschaften sind demnach auf ein Zusammenwirken des Füllstoffs mit dem besonderen Alpha-Olefin-Polymergemisch zurückzuführen

### Dynamische Erprobung - Tests an Riemen

Es wurden Endloskeilrippenriemen im Profil PK hergestellt - jeweils Riemen mit Mischung 1 und Riemen mit der Referenzmischung. Die Mischungen wurden für den gesamten Riemenunterbau verwendet (ohne Abdeckung). Die Zugträger bestanden aus Polyestercord oder Polyamidcord.

Die dynamische Erprobung erfolgte an Prüfständen für die
- Zerrüttungsprüfung
- Leistungszerrüttung
- Abriebprüfung

### 1.) Zerrüttungsprüfung

Die Zerrüttungsprüfung wird an einem Prüfstand gemäß Figur 3 durchgeführt. Der Prüfstand besteht aus einer 13-Scheiben -Anordnung mit den Scheiben d1 bis d13, davon 6 Rückenrollen (d2, d4, d6, d9, d11, d13). Bei dieser Prüfung wird der Riemen durch viele Biegewechsel im Kernbereich stark beansprucht. Gemessen wird die Laufzeitverbesserung in %.

Prüfstandparameter:
Trumkraft 66,5 N/Rippe
Kammertemperatur 130 °C
Drehzahl 3300 min⁻¹
Keilrippenriemen Profil PK

### Ergebnis:

| | |
|---|---|
| Laufzeit Mischung 1-Riemen | 128 % |
| Laufzeit Referenzmischungs-Riemen | 100 % |
| Verbesserung | **28 %** |

### 2.) Leistungszerrüttung

Bei dieser Prüfung wird der Riemen durch eine zusätzlich aufgebrachte Bremsleistung im Bereich der Cordebene beansprucht. Diese Prüfung gibt eine Aussage bezüglich der Qualität des Haftsystems zwischen Elastomer und Cord wieder. Gemessen wird wiederum die Laufzeitverbesserung in %.

Prüfstandparameter:
Bremsleistung 2,5 kW/Rippe
Trumkraft 120 N/Rippe
Kammertemperatur 120 °C
Drehzahl 5000 min⁻¹

### Ergebnis:

| | |
|---|---|
| Laufzeit Mischung 1-Riemen | 142 % |
| Laufzeit Referenzmischungs-Riemen | 100 % |
| Verbesserung | **42 %** |

### 3.) Abriebprüfung

Die Abriebprüfung erfolgte auf einer 8-Scheiben-Anordnung mit zwei Rückenrollen und automatischem Spannsystem. Bestimmt wurde der prozentuale Unterschied im Gewichtsverlust nach 100 h Laufzeit

Prüfstandparameter:
Trumkraft 350 - 400 N
Drehzahl 2000 min⁻¹
Leistungsaufnahme 12 kW
Verschränkung 10°
Drehungleichförmigkeit ±1,25 %

### Ergebnis:

| | |
|---|---|
| Gewichtsverlust Mischung 1-Riemen | 99 % |
| Gewichtsverlust Referenzmischungs-Riemen | 100 % |

Die Riemen sind im Abriebverhalten etwa gleichwertig. Ein deutlicher Vorteil des erfindungsgemäßen Riemens nach Mischung 1 besteht darin, dass der Abrieb nicht schwarz ist. Die Farbe des Abriebs kann beispielsweise an die Anwendungsumgebung angepasst werden.

### Zusammenfassung der dynamischen Erprobung

Der Riemen nach Mischung 1 besitzt eine geringere Eigenerwärmung als der Referenzriemen Die geringere Eigenerwärmung wirkt sich positiv auf die Riemenalterung und auf die Lebensdauer des Riemens aus.

Der neue Riemen besitzt außerdem eine bessere statische und dynamische Cordhaftung. - statisch ± 170 % (Referenz 100 %)
- dynamisch ± 142 % (Referenz 100 %).

Zusätzlich wurde eine wesentlich längere Haltbarkeit des unvulkanisierten Materials nach Mischung 1 beobachtet. Die Haltbarkeit war ca. 5mal länger als beim Rußriemen (Referenz).

## Patentansprüche

1. Riemen, insbesondere Antriebsriemen, mit einem Elastomer- I1 A -' Grundkörper und wenigstens einer Zugschicht mit Zugträgern, wobei der Grundkörper des Riemens insgesamt oder wenigstens ein Teil des Riemens aus einem Elastomer mit einem weißen Füllstoff aus hochdispersem Siliziumdioxid, insbesondere gefällter oder pyrogener Kieselsäure besteht, das erhältlich ist durch radikalische Vernetzung, ausgenommen durch Schwefelvulkanisation, eines Gemisches, enthaltend
(a) 51 bis 99 phr eines ersten Ethylen-alpha-Olefins mit einem Gehalt an Ethyleneinheiten von 40 bis 55 Gew.-% bezogen auf den Anteil des ersten alpha-Olefins,
(b) 1 bis 49 phr eines zweiten Ethylen-alpha-Olefins mit einem Gehalt an Ethyleneinheiten von 55 bis 78 Gew.-% bezogen auf den Anteil des zweiten alpha-Olefins,
wobei die Summe der Komponenten (a) und (b) wenigstens 50 Gew.-% am Gewichtsanteil des in dem Grundkörper enthaltenen Elastomers aus macht;
(c) 10 bis 90 phr eines Füllstoffs, der zu wenigstens 80 Gew.-% aus einem Kieselsäurematerial mit einer spezifischen Oberfläche nach BET größergleich 50 m²/g besteht, welches mit funktionellen Gruppen des Typs Vinyl, Allyl, Amino, Carboxyl oder Hydroxyl oberflächenfunktionalisiert ist oder im Gemisch mit einem Funktionalisierungsreagens für die Einführung der funktionellen Gruppen an dem Kieselsäurematerial eingemischt wird,
wobei das Funktionalisierungsreagenz ein bifunktionelles Organosilan ist, das am Siliziumatom mindestens eine Alkoxy-, Cycloalkoxy- oder Phenoxygruppe für die Anbindung an den Silica-Füllstoff besitzt und das als funktionelle Gruppe wenigstens eine Gruppe des Typs Vinyl, Allyl, Amino, Carboxyl oder Hydroxyl besitzt, und wobei die funktionellen Gruppen befähigt sind, bei der radikalischen Vernetzung in die Vernetzung der Alpha-Olefine mit eingebunden zu werden.

2. Riemen nach Anspruch 1, **dadurch gekennzeichnet, dass** das erste Ethylen-alpha-Olefin einen Gehalt an Ethyleneinheiten von 50 bis 55 Gew.-% bezogen auf den Anteil des ersten alpha-Olefins besitzt.

3. Riemen nach Anspruch 1 oder 2, **dadurch gekennzeichnet, dass** das zweite Ethylen-alpha-Olefin einen Gehalt an Ethyleneinheiten von 65 bis 75 Gew.-% bezogen auf den Anteil des zweiten alpha-Olefins besitzt.

4. Riemen nach einem der Ansprüche 1 bis 3, **dadurch gekennzeichnet, dass** das radikalisch zu vernetzende Gemisch einen Radikalbildner, vorzugsweise in einer Menge von 2 bis 12 phr, enthält.

5. Riemen nach einem der Ansprüche 1 bis 3, **dadurch gekennzeichnet, dass** das radikalisch zu vernetzende Gemisch 1 bis 30 phr eines ionischen Aktivators enthält.

6. Riemen nach einem der Ansprüche 1 bis 5, **dadurch gekennzeichnet, dass** das radikalisch zu vernetzende Gemisch zusätzlich Zusatz- und Hilfsstoffe enthält, insbesondere ausgewählt aus der Gruppe: Weichmacher, Dispergiermittel, Mastiziermittel, Haftvermittler, Trennmittel, Gleitmittel, Stabilisatoren, Vernetzungsbeschleuniger, Vernetzungsverzögerer, Alterungsschutzmittel, Farbstoffe, Verstärkungsfasern.

7. Riemen nach einem der Ansprüche 1 bis 6, **dadurch gekennzeichnet, dass** der ionische Aktivator ein Metallsalz einer ungesättigten organischen Säure ist.

8. Riemen nach einem der Ansprüche 1 bis 7, **dadurch gekennzeichnet, dass** das besondere Elastomer des Riemengrundkörpers zu wenigstens 50 Gew.-% ein Elastomer der M-Gruppe ist und keinen Naturkautschuk enthält.

9. Riemen nach einem der Ansprüche 1 bis 8, **dadurch gekennzeichnet, dass** radikalisch vernetze Elastomer wenigstens eine im Kontakt mit Kraftüberträgern oder Führungselementen stehende Riemenschicht bildet.

10. Riemen nach einem der Ansprüche 1 bis 9, **dadurch gekennzeichnet, dass** das radikalisch vernetzte Elastomer wenigstens eine im Inneren des Riemens liegende Riemenschicht bildet, insbesondere eine Zugträger-Einbettungsschicht.

11. Riemen nach einem der Ansprüche 1 bis 10, **dadurch gekennzeichnet, dass** das Elastomer eingefärbt ist, insbesondere pigmentiert ist.

12. Riemen nach einem der Ansprüche 1 bis 11, **dadurch gekennzeichnet, dass** wenigstens zwei Elastomerschichten oder Lagen oder Grundkörperbereich des Riemens unterschiedlich eingefärbt sind.

13. Riemen nach einem der Ansprüche 1 bis 12, **dadurch gekennzeichnet, dass** der Riemen rippenseitig keine Abdeckung und insbesondere keine textile Abdeckung trägt.

14. Riemen nach einem der Ansprüche 1 bis 13, **dadurch gekennzeichnet, dass** es sich um einen Keilriemen, insbesondere einen Keilrippenriemen handelt.

15. Verfahren zur Herstellung des Riemens nach einem der Ansprüche 1 bis 14, **dadurch gekennzeichnet, dass** das Vermischen der Ausgangsstoffe für das besondere Elastomer für den Grundkörper einstufig durch Vermengen aller Bestandteile in einem Mischer erfolgt, wobei ein gegebenenfalls zugegebener Radikalbildner zuletzt zugefügt wird.

## Claims

1. Belt, in particular drive belt, with an elastomer base and with at least one traction layer with tensile members, where the base of the belt in its entirety or at least one portion of the belt is composed of an elastomer which comprises a white filler made of high-dispersibility silicon dioxide, in particular of precipitated or fumed silica, and which is obtainable via free-radical crosslinking, but not via sulphur-vulcanization, of a mixture comprising
(a) from 51 to 99 phr of a first ethylene-alpha-olefin having, based on the content of the first alpha-olefin, from 40 to 55% by weight content of ethylene units,
(b) from 1 to 49 phr of a second ethylene-alpha-olefin having, based on the content of the second alpha-olefin, from 55 to 78% by weight content of ethylene units,
where the entirety of components (a) and (b) makes up at least 50% by weight of the content by weight of the elastomer present in the base;
(c) from 10 to 90 phr of a filler which is composed of at least 80% by weight of a silica material that has a specific BET surface area greater than or equal to 50 m²/g and that has been surface-functionalized with functional groups of the vinyl, allyl, amino, carboxy or hydroxy type, or is incorporated by mixing in a mixture with a functionalizing reagent for the introduction of the functional groups on the silica material,
where the functionalizing reagent is a bifunctional organosilane that has, on the silicon atom, at least one alkoxy, cycloalkoxy or phenoxy group for coupling to the silica filler and that has, as functional group, at least one group of the vinyl, allyl, amino, carboxy or hydroxy type, and where the functional groups are capable of concomitant involvement in the crosslinking of the alpha-olefins during the free-radical crosslinking process.

2. Belt according to Claim 1, **characterized in that** the content of ethylene units in the first ethylene-alpha-olefin is from 50 to 55% by weight, based on the content of the first alpha-olefin.

3. Belt according to Claim 1 or 2, **characterized in that** the content of ethylene units in the second ethylene-alpha-olefin is from 65 to 75% by weight, based on the content of the second alpha-olefin.

4. Belt according to any of Claims 1 to 3, **characterized in that** the mixture requiring free-radical crosslinking comprises a free-radical generator, preferably in an amount of from 2 to 12 phr.

5. Belt according to any of Claims 1 to 3, **characterized in that** the mixture requiring free-radical crosslinking comprises from 1 to 30 phr of an ionic activator.

6. Belt according to any of Claims 1 to 5, **characterized in that** the mixture requiring free-radical crosslinking also comprises additives and auxiliaries, in particular selected from the group of plasticizers, dispersing agents, masticating agents, adhesion promoters, release agents, lubricants, stabilizers, crosslinking accelerators, crosslinking retarders, antioxidants, dyes, reinforcing fibres.

7. Belt according to any of Claims 1 to 6, **characterized in that** the ionic activator is a metal salt of an unsaturated organic acid.

8. Belt according to any of Claims 1 to 7, **characterized in that** the particular elastomer of the belt base comprises at least 50% by weight of an M-group elastomer and comprises no natural rubber.

9. Belt according to any of Claims 1 to 8, **characterized in that** the free-radically-crosslinked elastomer forms at least one belt layer that is in contact with force-transmitters or with guiding elements.

10. Belt according to any of Claims 1 to 9, **characterized in that** the free-radically-crosslinked elastomer forms at least one belt layer situated in the interior of the belt, in particular a tensile-member-embedding layer.

11. Belt according to any of Claims 1 to 10, **characterized in that** the elastomer has been coloured, in particular pigmented.

12. Belt according to any of Claims 1 to 11, **characterized in that** at least two elastomer layers or at least two plies or base regions of the belt have been differently coloured.

13. Belt according to any of Claims 1 to 12, **characterized in that** the rib side of the belt has no protective covering and in particular no textile protective covering.

14. Belt according to any of Claims 1 to 13, **characterized in that** it is a V-belt, in particular a V-ribbed belt.

15. Process for the production of the belt according to any of Claims 1 to 14, **characterized in that** the mixing of the starting materials for the particular elastomer for the base takes place in one stage via mixing of all of the constituents in a mixer, where any free-radical generator optionally added is added last.

## Revendications

1. Courroie, en particulier courroie d'entraînement, comportant un corps de base en élastomère et au moins une couche de traction avec des tirants, dans laquelle le corps de base total de la courroie ou au moins une partie de la courroie se compose d'un élastomère avec une matière de charge blanche en dioxyde de silicium hautement dispersé, en particulier en acide silicique précipité ou pyrogène, qui peut être obtenu par réticulation radicalaire, sauf par vulcanisation au soufre, d'un mélange contenant;
(a) 51 à 99 phr d'une première alpha-oléfine d'éthylène avec une teneur en unités d'éthylène de 40 à 55 % en poids rapportés à la part de la première alpha-oléfine,
(b) 1 à 49 phr d'une deuxième alpha-oléfine d'éthylène avec une teneur en unités d'éthylène de 55 à 78 % en poids rapportés à la part de la deuxième alpha-oléfine,
dans laquelle la somme des composants (a) et (b) vaut au moins 50 % en poids de la part pondérale de l'élastomère contenu dans le corps de base;
(c) 10 à 90 phr d'une matière de charge, qui se compose pour au moins 80% d'un matériau d'acide silicique avec une surface spécifique selon BET de valeur égale à 50 m²/g, qui est fonctionnalisé en surface avec des groupes fonctionnels du type vinyle, allyle, amino, carboxyle ou hydroxyle ou est mélange dans le mélange avec un réactif de fonctionnalisation pour l'introduction des groupes fonctionnels sur le matériau d'acide silicique,
dans laquelle le réactif de fonctionnalisation est un organosilane bifonctionnel, qui possède sur l'atome de silicium au moins un groupe alcoxy, cycloalcoxy ou phénoxy pour la liaison à la matière de charge de silice, et qui possède comme groupe fonctionnel au moins un groupe du type vinyle, allyle, amino, carboxyle ou hydroxyle, et dans laquelle les groupes fonctionnels sont capables d'être intégrés dans la réticulation des alpha-oléfines lors de la réticulation radicalaire.

2. Courroie selon la revendication 1, **caractérisée en ce que** la première alpha-oléfine d'éthylène possède une teneur en unités d'éthylène de 50 à 55 % en poids rapportés à la part de la première alpha-oléfine.

3. Courroie selon la revendication 1 ou 2, **caractérisée en ce que** la deuxième alpha-oléfine d'éthylène possède une teneur en unités d'éthylène de 65 à 75 % en poids rapportés à la part de la deuxième alpha-oléfine.

4. Courroie selon l'une quelconque des revendications 1 à 3, **caractérisée en ce que** le mélange à réticuler de façon radicalaire contient un formateur de radicaux, de préférence en une quantité de 2 à 12 phr.

5. Courroie selon l'une quelconque des revendications 1 à 3, **caractérisée en ce que** le mélange à réticuler de façon radicalaire contient 1 à 30 phr d'un activateur ionique.

6. Courroie selon l'une quelconque des revendications 1 à 5, **caractérisée en ce que** le mélange à réticuler de façon radicalaire contient en outre des additifs et des adjuvants, en particulier sélectionnés dans le groupe des: plastifiants, agents dispersants, agents de mastication, agents adhérents, agents de séparation, agents lubrifiants, stabilisants, accélérateurs de réticulation, retardateurs de réticulation, agents de protection contre le vieillissement, colorants, fibres de renforcement.

7. Courroie selon l'une quelconque des revendications 1 à 6, **caractérisée en ce que** l'activateur ionique est un sel métallique d'un acide organique non saturé.

8. Courroie selon l'une quelconque des revendications 1 à 7, **caractérisée en ce que** l'élastomère particulier du corps de base de la courroie est pour au moins 50 % en poids un élastomère du groupe M et ne contient pas de caoutchouc naturel.

9. Courroie selon l'une quelconque des revendications 1 à 8, **caractérisée en ce que** l'élastomère réticulé de façon radicalaire forme au moins une couche de courroie se trouvant en contact avec des transmetteurs de force ou des éléments de guidage.

10. Courroie selon l'une quelconque des revendications 1 à 9, **caractérisée en ce que** l'élastomère réticulé de façon radicalaire forme au moins une couche de courroie située à l'intérieur de la courroie, en particulier une couche d'enrobage des tirants.

11. Courroie selon l'une quelconque des revendications 1 à 10, **caractérisée en ce que** l'élastomère est coloré, en particulier pigmenté.

12. Courroie selon l'une quelconque des revendications 1 à 11, **caractérisée en ce qu'**au moins deux couches ou strates d'élastomère ou une région du corps de base de la courroie sont colorées différemment.

13. Courroie selon l'une quelconque des revendications 1 à 12, **caractérisée en ce que** la courroie ne porte du côté des nervures aucun recouvrement et en particulier aucun recouvrement textile.

14. Courroie selon l'une quelconque des revendications 1 à 13, **caractérisée en ce que** la courroie est une courroie trapézoïdale, en particulier une courroie trapézoïdale à nervures.

15. Procédé de fabrication d'une courroie selon l'une quelconque des revendications 1 à 14, **caractérisé en ce que** l'on effectue le mélange des matières premières pour l'élastomère particulier destiné au corps de base en une étape par mélange de tous les composants dans un mélangeur, dans lequel on ajoute éventuellement en dernier lieu un formateur de radicaux ajouté.
